# EUROPEAN PATENT APPLICATION

(11) **EP 3 144 871 A1**
(43) Date of publication of application: **22.03.2017**
(21) Application number: 16159780.2
(22) Date of filing: 11.03.2016
(51) Int. Cl.: G06Q 40/02, G06Q 20/32, G06Q 20/34, G06F 17/27, H04W 4/14

(54) **METHOD AND DEVICE FOR PROCESSING CARD APPLICATION DATA**

(30) Priority: 15.09.2015 CN 201510587718
(71) Applicant: Xiaomi Inc., Beijing 100085 (CN)
(72) Inventor: CHEN, Pengfei, 100085 BEIJING (CN); WU, Zhining, 100085 BEIJING (CN); SHANG, Min, 100085 BEIJING (CN)
(74) Representative: Delumeau, François Guy

(57) **Abstract**

Embodiments herein relate to a method and device for processing card application data. The method includes: receiving a card application request (S101, S501); acquiring, according to the card application request, historical communication data including user information of a user required for card application (S102, S502); extracting the user information from the historical communication data (S103, S503); correspondingly writing the user information into a card application page(S104, S504); and receiving a submission request, and submitting, according to the submission request, the card application page (S105, S507).

## Description

### TECHNICAL FIELD

The present disclosure generally relates to the field of data processing, and in particular to a method and device for processing card application data.

### BACKGROUND

With continuous development of mobile Internet technologies, an increasing number of services become available on equipment such as a computer, a mobile phone, and a tablet computer. For example, many banks introduce a service of applying online for a credit card. Such online application services are well received by users. As the number of cards issued by banks increases each year, online card applications increase, too.

The new form of online card application has its shortcomings. With existing online card application, a user is required to manually fill in, through a browser, identity information, income information, a mailing address, and other user qualification distinguishing information such as educational background, work experience, etc. A user has to take time and trouble to fill in much information manually, which is error-prone.

### SUMMARY

To this end, embodiments herein provide a method and device for processing card application data, in accordance with claims which follow. Generally, the method is a computer-implemented method. Generally, the method and device save time and effort for a user because they automate, at least partially, the procedure for completing a card application page.

According to a first aspect herein, a method for processing card application data includes:
receiving a card application request;
acquiring, according to the card application request, historical communication data including user information of a user required for card application;
extracting the user information from the historical communication data;
correspondingly writing the user information into a card application page; and
receiving a submission request, and submitting, according to the submission request, the card application page.

Historical communication data including user information of a user required for card application may be acquired according to a received card application request; the user information may be extracted from the historical communication data; the extracted user information may be correspondingly written into a card application page, such that the user is not required to manually fill in the user information, saving time and trouble, reducing a probability of error, facilitating online card application by the user.

The acquiring, according to the card application request, of historical communication data including user information of a user required for card application may include:
acquiring, according to the card application request, a short message service (SMS) message (a text) including financial information.

The extracting of the user information from the historical communication data may include:
analyzing the SMS message, and extracting income information of the user according to a result of the analysis.

The acquired SMS message including the financial information is unlikely to be faked, so that the user information extracted from the historical communication data is more objective and accurate, increasing data authenticity, reducing a deviation due to manually filling in information by the user, reducing a risk of the card issuing agency; meanwhile, information may be extracted flexibly in multiple modes that are easy to implement.

The acquiring, according to the card application request, of historical communication data including user information of a user required for card application may include:
acquiring, according to the card application request, payment account registration information.

The payment account registration information may be acquired in various ways. For example the payment account registration information may be information that the user has already registered in the mobile phone (or other terminal) regarding a payment account belonging to the user (e.g. information the user has registered so that the user can make payments using their mobile phone). As another example, the payment account registration information may be information which the user provided to a financial institution at a time when the user was engaged in setting up a payment account with that financial institution, and which has been transmitted to the mobile phone (or other terminal). As yet another example, the payment account registration information may be information that the user provided to a third party device regarding a payment account belonging to the user: and which has been transmitted to the mobile phone (or other terminal). Payment account registration information that has been transmitted to the mobile phone (or other terminal) may be stored in the terminal.

The extracting of the user information from the historical communication data may include:
extracting identity information of the user from the payment account registration information.

The acquired payment account registration information will have been checked to be objective, authentic and unlikely to be faked (e.g. by the financial institution offering the payment account), so that the user information extracted from the historical communication data is more objective and accurate, increasing data authenticity, reducing a deviation due to manually filling in information by the user, reducing risk to the card issuing agency; meanwhile, information may be extracted flexibly in multiple modes that are easy to implement.

The acquiring, according to the card application request, of historical communication data including user information of a user required for card application may include:
acquiring a historical payment record according to the card application request.

The extracting of the user information from the historical communication data may include:
extracting a mailing address of the user from the historical payment record.

The acquired historical payment record is unlikely to be faked, so that the user information extracted from the historical communication data is more objective and accurate, increasing data authenticity, reducing a deviation due to manually filling in information by the user, reducing a risk of the card issuing agency; meanwhile, information may be extracted flexibly in multiple modes that are easy to implement.

The acquiring, according to the card application request, of historical communication data including user information of a user required for card application may include:
acquiring mail client data according to the card application request.

The acquired mail client data may be data of an email client that is resident on the terminal.

The extracting of the user information from the historical communication data may include:
extracting email information of the user from the mail client data.

The extracted email information may consist of or include various items, including but not limited to: an email address, and the frequency with which different email addresses are used (so that it can be determined which email address is used most frequently when there is more than one email address), and so on. The mail client data may be acquired in various ways including, but not limited to, reading data stored in the terminal itself, or via contact with an external device (e.g. a server of the user's email service provider).

The acquired mail client data are unlikely to be faked, so that the user information extracted from the historical communication data are more objective and accurate, increasing data authenticity, reducing a deviation due to manually filling in information by the user, reducing a risk of the card issuing agency; meanwhile, information may be extracted flexibly in multiple modes that are easy to implement.

The correspondingly writing the user information into a card application page may include:
matching the user information to an entry to be filled in on the card application page, and writing, according to a matching result, the user information into an entry to be filled in corresponding to the user information.

The extracted information may be automatically written into the card application page. With such a simple information writing process, a page turning operation due to a small screen of a mobile terminal such as a mobile phone may be avoided.

The correspondingly writing the user information into a card application may include:
receiving a trigger instruction for triggering an entry to be filled in on the card application page, and displaying, according to the trigger instruction, the user information corresponding to the triggered entry to be filled in; and
receiving a writing instruction for writing the displayed user information, and writing, according to the writing instruction, the displayed user information into the triggered entry to be filled in.

Extracted information may be written into the card application page based on an operation of the user, such that a workload for manually inputting information by the user may be effectively reduced.

The method may further include:
before the receiving of a submission request, displaying prompting information for prompting the user to check the user information; and
receiving information on user modification to the card application page.

By displaying prompting information, the user may be prompted to check the information that has been automatically extracted; the information on user modification to the card application page may be received, improving accuracy of the user information.

According to a second aspect herein, a device for processing card application data includes:
a receiving module configured for: receiving a card application request;
an acquiring module configured for: acquiring, according to the card application request received by the receiving module, historical communication data including user information of a user required for card application;
an extracting module configured for: extracting the user information from the historical communication data acquired by the acquiring module;
a writing module configured for: correspondingly writing the user information extracted by the extracting module into a card application page; and
a submitting module configured for: receiving a submission request, and submitting, according to the submission request, the card application page into which the writing module writes the user information.

The advantages and technical effects of the device herein correspond to those of the method presented above.

The acquiring module may include:
a first acquiring sub-module configured for: acquiring, according to the card application request, an SMS message including financial information.

The extracting module may include:
a first extracting sub-module configured for: analyzing the SMS message acquired by the first acquiring sub-module, and extracting income information of the user according to a result of the analysis.

The acquiring module may include:
a second acquiring sub-module configured for: acquiring, according to the card application request, payment account registration information.

The extracting module may include:
a second extracting sub-module configured for: extracting identity information of the user from the payment account registration information acquired by the second acquiring sub-module.

The acquiring module may include:
a third acquiring sub-module configured for: acquiring a historical payment record according to the card application request.

The extracting module may include:
a third extracting sub-module configured for: extracting a mailing address of the user from the historical payment record acquired by the third acquiring sub-module.

The acquiring module may include:
a fourth acquiring sub-module configured for: acquiring mail client data according to the card application request.

The extracting module may include:
a fourth extracting sub-module configured for: extracting email information of the user from the mail client data acquired by the fourth acquiring sub-module.

The writing module is configured for:
matching the user information to an entry to be filled in on the card application page, and writing, according to a matching result, the user information into an entry to be filled in corresponding to the user information.

The writing module may include:
a displaying sub-module configured for: receiving a trigger instruction for triggering an entry to be filled in on the card application page, and displaying, according to the trigger instruction, the user information corresponding to the triggered entry to be filled in; and
a writing sub-module configured for: receiving a writing instruction for writing the user information displayed by the displaying sub-module, and writing, according to the writing instruction, the displayed user information into the triggered entry to be filled in.

The device may further include:
a displaying module configured for: before the submitting module receives the submission request, displaying prompting information for prompting the user to check the user information; and
a modification receiving module configured for: receiving information on user modification to the card application page.

According to a third aspect herein, a device for processing card application data includes:
a processor; and
a memory configured for storing an instruction executable by the processor.

The processor is configured for:
receiving a card application request;
acquiring, according to the card application request, historical communication data including user information of a user required for card application;
extracting the user information from the historical communication data;
correspondingly writing the user information into a card application page; and
receiving a submission request, and submitting, according to the submission request, the card application page.

In one particular embodiment, the steps of the method for processing card application data are determined by computer program instructions.

Consequently, according to a fourth aspect herein, the disclosure is further directed to a computer program for executing the steps of the method for processing card application data as described above when this program is executed by a computer.

This program can use any programming language and take the form of source code, object code or a code intermediate between source code and object code, such as a partially compiled form, or any other desirable form.

The invention further provides a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

Note that the general description above and detailed description below are illustrative examples that are explanatory only, and are not intended for limiting the present invention.

### BRIEF DESCRIPTION OF THE DRAWINGS

Accompanying drawings herein are incorporated in and constitute a part of this specification, illustrate embodiments consistent with the present invention and, together with the description, serve to explain the principles of the present invention.
Fig.1 is a flowchart of a method for processing card application data according to an embodiment of the present invention.
Fig.2 is a flowchart of extracting user information according to an embodiment.
Fig.3 is a schematic diagram of acquiring user information according to an embodiment.
Fig.4 is a diagram of a scene of a method for processing card application data according to an embodiment.
Fig.5 is a flowchart of another method for processing card application data according to an exemplary embodiment.
Fig.6 is a block diagram of a device for processing card application data according to an embodiment.
Fig.7A is a block diagram of another device for processing card application data according to an embodiment.
Fig.7B is a block diagram of another device for processing card application data according to an embodiment.
Fig.7C is a block diagram of another device for processing card application data according to an embodiment.
Fig.7D is a block diagram of another device for processing card application data according to an embodiment.
Fig.8A is a block diagram of another device for processing card application data according to an embodiment.
Fig.8B is a block diagram of another device for processing card application data according to an embodiment.
Fig.9 is a block diagram of a device for processing card application data, according to an embodiment.

### DETAILED DESCRIPTION

Reference will now be made in detail to certain illustrative embodiments, examples of which are illustrated in the accompanying drawings. In drawing-related description below, unless indicated otherwise, identical references in different drawings represent identical or like elements. Implementations in the following embodiments do not represent all implementations according to the present disclosure. On the contrary, they are merely examples of devices and methods according to some aspects of the present invention as recited in the appended claims.

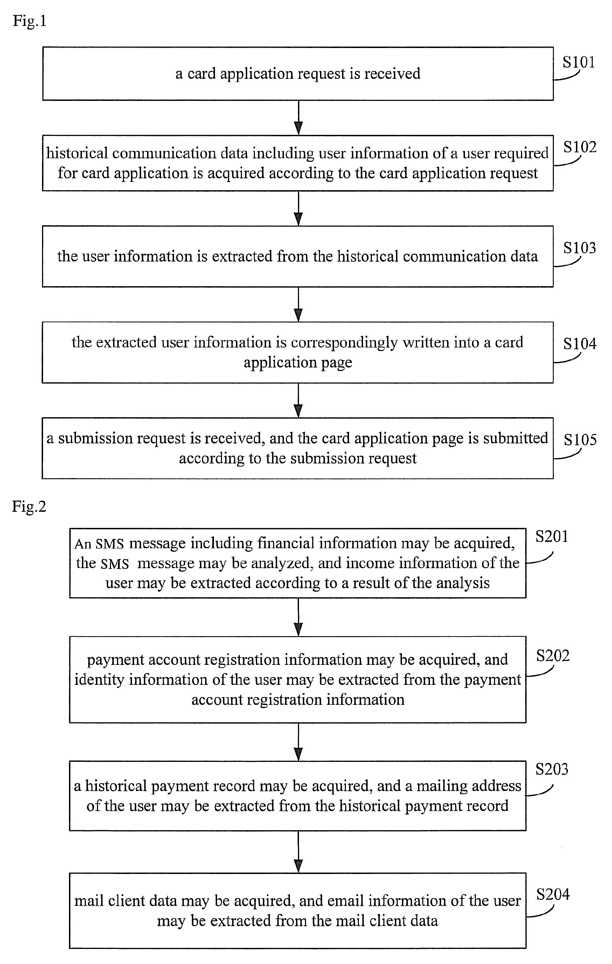

Fig.1 is a flowchart of a method for processing card application data according to an embodiment of the present invention. As shown in Fig.1, the method for processing card application data may be applied by terminal equipment such as a mobile phone, a tablet computer, a Personal Digital Assistant (PDA), etc. A preset operating system or a preset Application (APP) may be installed in the terminal equipment. The method includes steps 101-105 as follows.

In step 101, a card application request is received.

In the embodiment, when a user expects to apply for a card online using terminal equipment such as a mobile phone, the user may enter an online card application page using a browser application provided on the terminal equipment. When the user clicks on an entry "online card application", the terminal equipment such as the mobile phone may receive the card application request.

In step 102, historical communication data including user information of a user required for card application is acquired according to the card application request.

After the card application request is received, the historical communication data including the user information of the user required for card application may be acquired according to the card application request. For example, an SMS message including financial information may be acquired according to the card application request. Payment account registration information may also be acquired according to the card application request. A historical payment record may also be acquired according to the card application request. Mail client data may further be acquired according to the card application request.

In step 103, the user information is extracted from the historical communication data.

The user information may include, but is not limited to, one or more of: income information, identity information, a mailing address, email information, information on a bank card of the user, and the like.

When the acquired historical communication data includes an SMS message, the SMS message may be analyzed, and the income information of the user may be extracted according to a result of the analysis. The invention is not particularly limited having regard to the timing of the analysis of the SMS messages. Thus, for example, some or all of the SMS messages sent/received by the terminal may be stored and the analysis to detect financial information therein may be performed later on, for example at a time when a user makes a card application request. As another example, SMS messages may be analyzed at the time when the messages are sent/received, to check for the presence of financial information (e.g. income information), and if financial information is detected then appropriate action may be taken (e.g. the relevant SMS message may be stored in memory, the relevant financial information may be extracted from the SMS message and stored in memory, and so on). In the latter case, the terminal may be configured to implement decision rules that save sent/received SMS messages which contain financial information, even if some other rules or strategy mandates deletion of some or all of the other SMS messages.

When the acquired historical communication data includes payment account registration information, the identity information of the user may be extracted from the payment account registration information. The payment account registration information may be acquired in various ways. For example, payment account registration may be held in a memory of the terminal device itself. As another example, the payment account registration information may have been acquired by the terminal from a financial institution where the user has the relevant payment account, or from another party.

When the acquired historical communication data includes historical payment record, the mailing address of the user may be extracted from the historical payment record.

When the acquired historical communication data includes mail client data, the email information of the user may be extracted from the mail client data.

In step 104, the extracted user information is correspondingly written into a card application page.

In the embodiment, after the user information is extracted according to the card application request, the extracted user information may be correspondingly written into the card application page, which may be done in many modes, two of which are listed below.

In Mode 1, the user information may be matched to an entry to be filled in on the card application page; the user information may be written into an entry to be filled in corresponding to the user information according to a matching result.

For example, the card application page may include a number of entries to be filled in, such as an entry for the income of the user, an entry for a mailing address of the user, etc. After the user information is extracted, by character matching, the extracted income information of the user may be written into the entry for the income, and the mailing address of the user may be written into the entry for the mailing address, and so on.

In such a mode, the extracted information may be automatically written into the card application page. With such a simple information writing process, a page turning operation due to a small screen of a mobile terminal such as a mobile phone may be avoided.

In Mode 2, a trigger instruction for triggering an entry to be filled in on the card application page may be received; user information corresponding to the triggered entry to be filled in may be displayed according to the trigger instruction; a writing instruction for writing the displayed user information may be received; and the displayed user information may be written into the triggered entry to be filled in according to the writing instruction.

For example, when the user clicks on an entry to be filled in on the card application page, automatically extracted user information corresponding to the entry may pop up. For example, when identity information of the user is clicked on, the extracted ID card number of the user may pop up. When the user clicks to select an entry for the ID card number, the writing instruction is received, and then user information corresponding to the selected entry, namely, the ID card number, may be written into the selected entry to be filled in.

In addition, note that the user information may be extracted from the historical communication data before or after receiving the trigger instruction. For example, after the trigger instruction is received, user information may be extracted from the historical communication data, and then extracted user information corresponding to the trigger instruction may pop up.

In such a mode, extracted information may be written into the card application page based on an operation of the user, such that a workload for manually inputting information by the user may be effectively reduced.

In step 105, a submission request is received, and the card application page is submitted according to the submission request.

In the embodiment, after the extracted user information is correspondingly written into the card application page, when the user clicks on a "submit" key, the terminal equipment such as the mobile phone may receive the submission request and submit, according to the submission request, the card application page to a card application agency. Typically the card application page is submitted to the card application agency in a transmission via a wireless network (telecommunications network, data network, etc.). After receiving the card application page, the card application agency may audit the information in the page and issue a card after the information passes the audit.

With the method for processing card application data according to an aforementioned embodiment, historical communication data including user information of a user required for card application may be acquired according to a received card application request; the user information may be extracted from the historical communication data; the extracted user information may be correspondingly written into a card application page, such that the user is not required to manually fill in the user information, saving time and trouble, reducing a probability of error, facilitating online card application by the user.

Fig.2 is a flowchart of extracting user information according to an embodiment. As shown in Fig.2, the method may include steps as follows.

In step 201, an SMS message including financial information may be acquired, the SMS message may be analyzed, and income information of the user may be extracted according to a result of the analysis.

In the embodiment, terminal equipment such as a mobile phone may acquire an SMS message including financial information such as a bank card income notifying short message for the user (e.g. an SMS message informing the user that a salary payment has been credited to the user's account), analyze the SMS message, and extract the income information of the user according to the result of the analysis.

The income information of the user may refer to information on annual income of the user or on monthly income of the user.

When information on annual income is to be acquired, acquired bank card income notifying SMS messages for the user over 12 months may be analyzed, and results of the analysis may be collected to acquire the information on the annual income of the user.

When information on monthly income is to be acquired, acquired bank card income notifying SMS messages for the user over 12 months may be analyzed, results of the analysis may be collected, and average thereof may be obtained to acquire the information on the monthly income of the user.

In step 202, payment account registration information may be acquired, and identity information of the user may be extracted from the payment account registration information.

There are various circumstances in which a user may register a payment account and which may be exploited by embodiments of the present invention. Thus, for example, the user may register details of a payment account in the terminal itself (e.g. because the user wishes to be able to make payments using the terminal). As another example, the user may register a payment account with a financial institution (e.g. the user may set up the payment account with that financial institution, for use in future financial transactions). As a still further example, the user may register a payment account with a third party (e.g. by interaction with a server of an online merchant) so that the user can make future payments to the third party/other parties, using the account. In registering a payment account, the user may fill in true identity information such as ID card information. Therefore, in the embodiment, the terminal equipment such as the mobile phone may extract the identity information of the user from the payment account registration information of the user.

In addition, in registering a payment account, when the user also fills in information on a bank card bound to the payment account, in the embodiment, information on a bank card of the user, such as a bank card number, may also be acquired in addition to the identity information of the user.

In step 203, a historical payment record may be acquired, and a mailing address of the user may be extracted from the historical payment record.

In the embodiment, the terminal equipment such as the mobile phone may acquire a historical payment record of the user for water, electricity, gas and the like from a payment platform, and analyze the historical payment record of the user for water, electricity, gas and the like to acquire the mailing address of the user.

In step 204, mail client data may be acquired, and email information of the user may be extracted from the mail client data.

In the embodiment, the terminal equipment such as the mobile phone may acquire the mail client data and extract an email account of the user from the mail client data.

In addition, after the email account of the user is extracted, resume information (curriculum vitae data) of the user may further be acquired from the email account, and information such as educational background and work experience of the user may be extracted from the resume information.

Note that in the embodiment, the income information, the identity information, the mailing address and the email information of the user may be acquired by steps 201-204; in a practical application, just a part of the user information may be acquired through any one, two or three steps of steps 201-204. In addition, there is no strict sequence for executing steps 201-204. For example, Step 202 may be executed before or after Step 201.

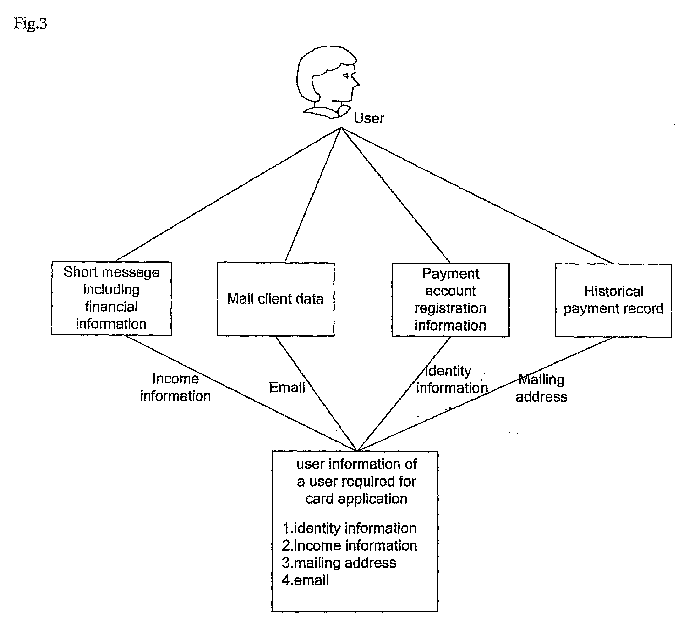

In addition, Fig.3 clearly shows a process of acquiring the user information by different means according to the embodiment shown in Fig.2. It may be seen in Fig.3 that steps 201-204 are parallel to each other.

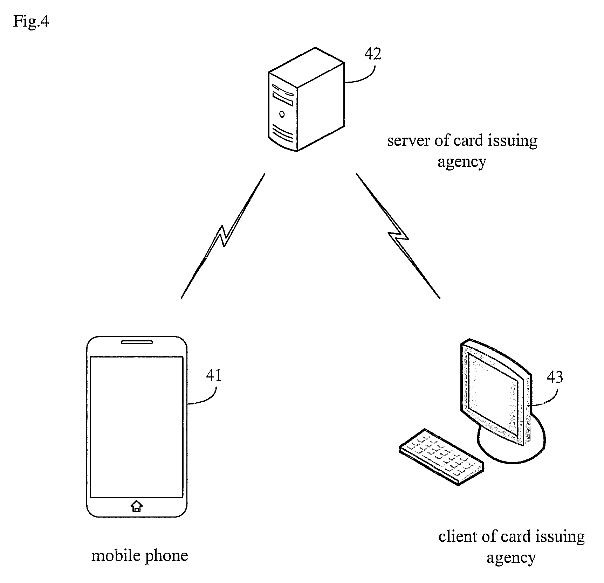

An embodiment herein may be described below, as an example, with reference to Fig.4. As shown in Fig.4, when a user applies for a credit card online using a mobile phone 41, an operating system of the mobile phone 41 or an APP installed on the mobile phone 41 may acquire and analyze a bank card income notifying SMS message for the user, to acquire income information of the user; in addition, the mobile phone 41 may interact with a payment system to acquire payment account registration information and acquire identity information of the user according to the payment account registration information; acquire utility bill data of the user such as a historical gas payment record using an APP such as a utility payment APP installed in the mobile phone 41, and acquire a mailing address of the user according to the historical gas payment record. After the acquired information is written into a card application page, the mobile phone 41 may receive a triggering operation of the user over a "submit" key, and submit the card application page according to the triggering operation. For example, the mobile phone 41 may submit the card application page to a server 42 of a card application agency. A client 43 of the card application agency may then acquire the card application page from the server 42, and staff of the card application agency may audit information in the card application page, issue a credit card after the information passes the audit, and mail the credit card to the mailing address provided on the card application page. Note that the mobile phone 41 may also be replaced by other terminal equipment such as a tablet computer installed with a preset operating system or a required APP, that is, the tablet computer may extract the user information, write the extracted user information into the card application page, submit the card application page, etc.

In the embodiment, various kinds of acquired historical communication data are checked to be objective, authentic and unlikely to be faked, and thus the user information extracted from the historical communication data are objective and accurate, increasing data authenticity, reducing a deviation due to manually filling in information by the user, reducing a risk of the card issuing agency; meanwhile, information may be extracted flexibly in multiple modes that are easy to implement.

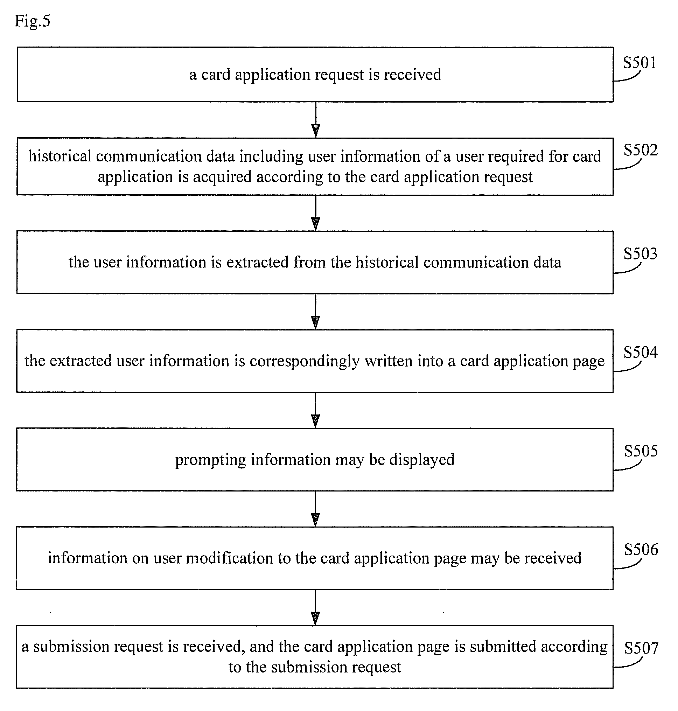

Fig.5 is a flowchart of a method for processing card application data according to an embodiment. As shown in Fig.5, the method may include steps as follows.

Steps 501-504 are the same as steps 101-104, and will not be repeated here.

In step 505, prompting information may be displayed. The prompting information may be configured for prompting the user to check the user information.

In the embodiment, as the extracted information may be wrong, after the extracted user information is correspondingly written into the card application page, the prompting information may be displayed. For example, prompting information "Please check user information filled in" may be displayed.

In step 506, information on user modification to the card application page may be received.

In the embodiment, the user may check the user information according to the prompting information, and when a piece of information, such as some information in the mailing address, is found to be wrong, the user may make modification manually to correct the information.

After the user has manually corrected the information, the terminal equipment such as the mobile phone may receive information on the user modification.

In addition, when all information filled in on the card application page is correct, the user is not required to modify the user information written in the card application page, and may directly submit the card application page.

In step 507, a submission request is received, and the card application page is submitted according to the submission request.

Step 507 may be implemented same as Step 105, which will not be repeated here.

In the embodiment, by displaying prompting information, the user may be prompted to check the information, facilitating increasing accuracy of the user information; the information on user modification to the card application page may be received, improving accuracy of the user information.

Corresponding to a method for processing card application data according to an aforementioned embodiment, an embodiment herein further provides a device for processing card application data.

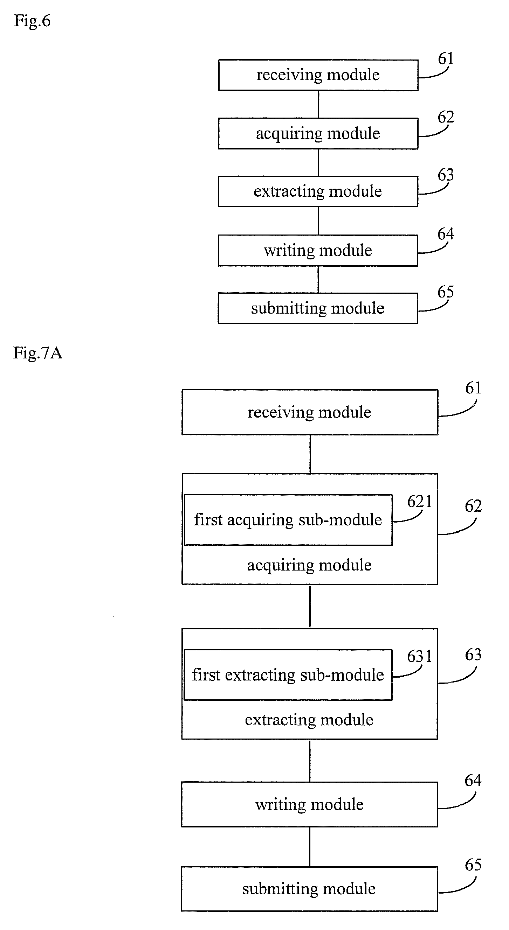

Fig.6 is a block diagram of a device for processing card application data according to an embodiment. As shown in Fig.6, the device includes: a receiving module 61, an acquiring module 62, an extracting module 63, a writing module 64 and a submitting module 65.

The receiving module 61 is configured for: receiving a card application request.

The acquiring module 62 is configured for: acquiring, according to the card application request received by the receiving module 61, historical communication data including user information of a user required for card application.

The extracting module 63 is configured for: extracting the user information from the historical communication data acquired by the acquiring module 62.

The writing module 64 is configured for: correspondingly writing the user information extracted by the extracting module 63 into a card application page.

The submitting module 65 is configured for: receiving a submission request, and submitting, according to the submission request, the card application page into which the writing module 64 writes the user information.

In one embodiment, the writing module 64 may be configured for: matching the user information to an entry to be filled in on the card application page, and writing, according to a matching result, the user information into an entry to be filled in corresponding to the user information. The device shown in Fig.6 is configured for implementing the method shown in Fig.1, content description involved thereof is the same and will not be repeated here.

With the device for processing card application data according to the embodiment, the acquiring module acquires the historical communication data including the user information of a user required for card application according to the received card application request, the extracting module extracts the user information from the historical communication data, and the writing module correspondingly writes the extracted user information into the card application page, such that the user is not required to manually fill in the user information, saving time and trouble, reducing a probability of error, facilitating online card application by the user.

Fig.7A is a block diagram of another device for processing card application data according to an embodiment. As shown in Fig.7A, based on the embodiment shown in Fig.6, the acquiring module 62 may include a first acquiring sub-module 621.

The first acquiring sub-module 621 may be configured for: acquiring, according to the card application request, an SMS message including financial information.

The extracting module 63 may include a first extracting sub-module 631.

The first extracting sub-module 631 may be configured for: analyzing the SMS message acquired by the first acquiring sub-module 621, and extracting income information of the user according to a result of the analysis.

The device shown in Fig.7A may be configured for implementing the method shown in Fig.2, and content description involved thereof is the same and will not be repeated here.

In the abovementioned embodiment, the acquired SMS message including the financial information is unlikely to be faked, so that the user information extracted from the historical communication data are more objective and accurate, increasing data authenticity, reducing a deviation due to manually filling in information by the user, reducing a risk of the card issuing agency; meanwhile, information may be extracted flexibly in multiple modes that are easy to implement.

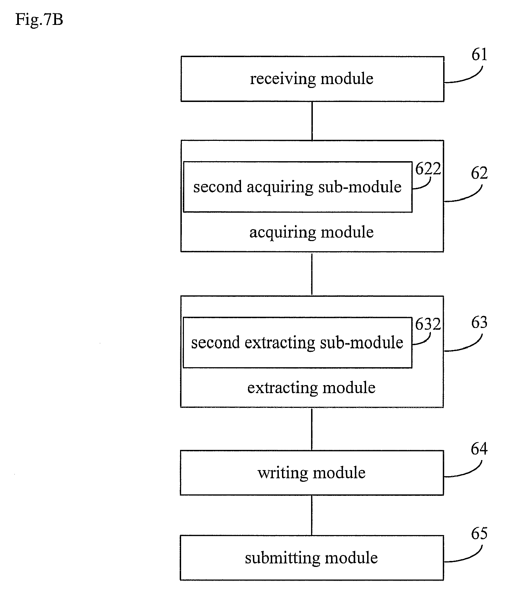

Fig.7B is a block diagram of another device for processing card application data according to an embodiment. As shown in Fig.7B, based on the embodiment shown in Fig.6, the acquiring module 62 may include a second acquiring sub-module 622.

The second acquiring sub-module 622 may be configured for: acquiring, according to the card application request, payment account registration information.

The extracting module 63 may include a second extracting sub-module 632.

The second extracting sub-module 632 may be configured for: extracting identity information of the user from the payment account registration information acquired by the second acquiring sub-module 622.

The device shown in Fig.7B may be configured for implementing the method shown in Fig.2, and content description involved thereof is the same and will not be repeated here.

In the abovementioned embodiment, the acquired payment account registration information is checked to be objective, authentic and unlikely to be faked, so that the user information extracted from the historical communication data are more objective and accurate, increasing data authenticity, reducing a deviation due to manually filling in information by the user, reducing a risk of the card issuing agency; meanwhile, information may be extracted flexibly in multiple modes that are easy to implement.

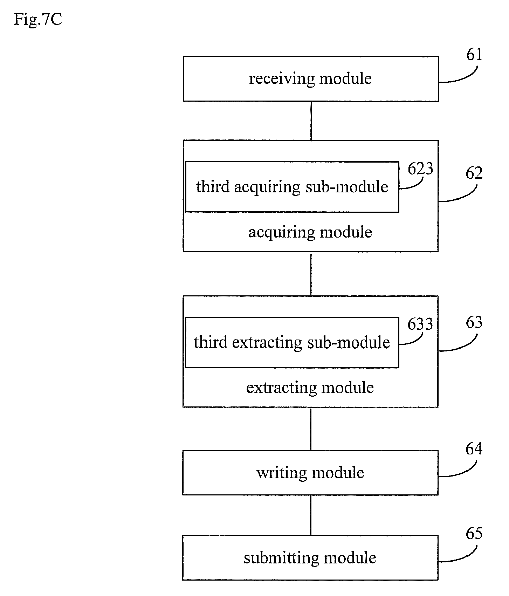

Fig.7C is a block diagram of another device for processing card application data according to an embodiment. As shown in Fig.7C, based on the embodiment shown in Fig.6, the acquiring module 62 may include a third acquiring sub-module 623.

The third acquiring sub-module 623 may be configured for: acquiring a historical payment record according to the card application request.

The extracting module 63 may include a third extracting sub-module 633.

The third extracting sub-module 633 may be configured for: extracting a mailing address of the user from the historical payment record acquired by the third acquiring sub-module 623.

The device shown in Fig.7C may be configured for implementing the method shown in Fig.2, and content description involved thereof is the same and will not be repeated here.

In the abovementioned embodiment, the acquired historical payment record is unlikely to be faked, so that the user information extracted from the historical communication data are more objective and accurate, increasing data authenticity, reducing a deviation due to manually filling in information by the user, reducing a risk of the card issuing agency; meanwhile, information may be extracted flexibly in multiple modes that are easy to implement.

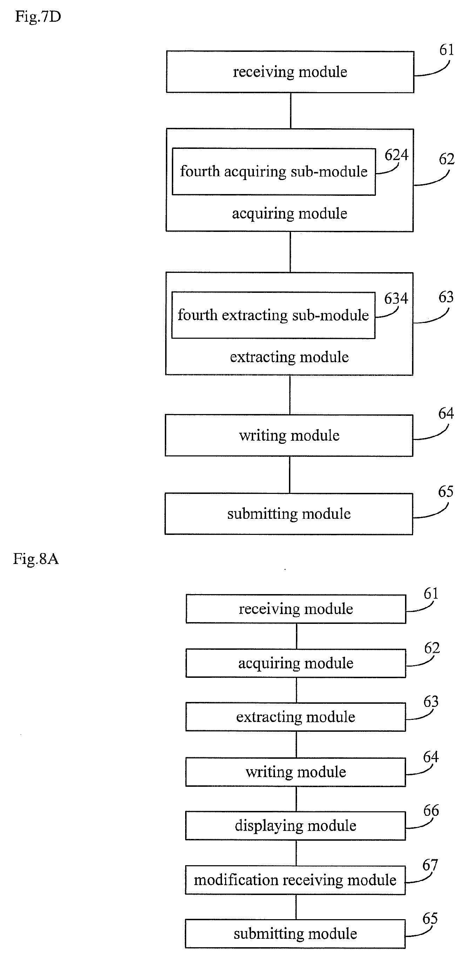

Fig.7D is a block diagram of another device for processing card application data according to an embodiment. As shown in Fig.7D, based on the embodiment shown in Fig.6, the acquiring module 62 may include a fourth acquiring sub-module 624.

The fourth acquiring sub-module 624 may be configured for: acquiring mail client data according to the card application request.

The extracting module 63 may include a fourth extracting sub-module 634.

The fourth extracting sub-module 634 may be configured for: extracting email information of the user from the mail client data acquired by the fourth acquiring sub-module 624.

The device shown in Fig.7D may be configured for implementing the method shown in Fig.2, and content description involved thereof is the same and will not be repeated here.

In the abovementioned embodiment, the acquired mail client data are unlikely to be faked, so that the user information extracted from the historical communication data are more objective and accurate, increasing data authenticity, reducing a deviation due to manually filling in information by the user, reducing a risk of the card issuing agency; meanwhile, information may be extracted flexibly in multiple modes that are easy to implement.

Fig.8A is a block diagram of another device for processing card application data according to an embodiment. As shown in Fig.8A, based on the embodiment shown in Fig.6, the device may further include a displaying module 66 and a modification receiving module 67.

The displaying module 66 may be configured for: before the submitting module 65 receives the submission request, displaying prompting information for prompting the user to check the user information.

The modification receiving module 67 may be configured for: receiving information on user modification to the card application page.

The device shown in Fig.8A may be configured for implementing the method shown in Fig.5, and content description involved thereof is the same and will not be repeated here.

In the abovementioned embodiment, the prompting information may be displayed to prompt the user to check the information, and the information on user modification to the card application page may be received, increasing accuracy of the user information.

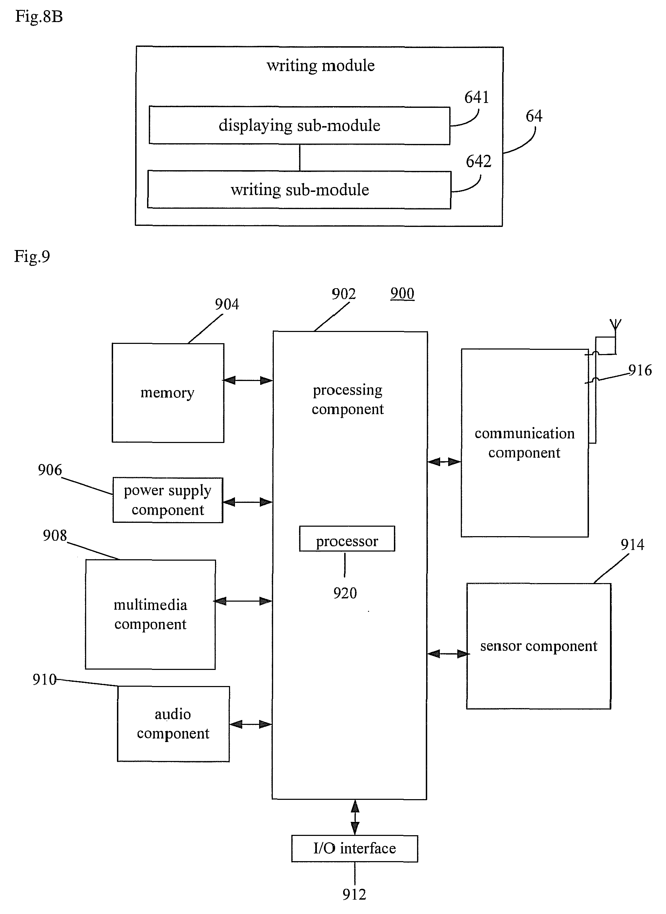

Fig.8B is a block diagram of another device for processing card application data according to an embodiment. As shown in Fig.8B, based on the embodiment shown in Fig.6, the writing module 64 may include a displaying sub-module 641 and a writing sub-module 642.

The displaying sub-module 641 may be configured for: receiving a trigger instruction for triggering an entry to be filled in on the card application page, and displaying, according to the trigger instruction, the user information corresponding to the triggered entry to be filled in.

The writing sub-module 642 may be configured for: receiving a writing instruction for writing the user information displayed by the displaying sub-module 641, and writing, according to the writing instruction, the displayed user information into the triggered entry to be filled in.

The device shown in Fig.8B may be configured for implementing the method shown in Fig.1, and content description involved thereof is the same and will not be repeated here.

In the abovementioned embodiment, extracted information may be written into the card application page based on an operation of the user, such that a workload for manually inputting information by the user may be effectively reduced.

A specific mode in which a module or a sub-module of the device in an aforementioned embodiment executes an operation has been elaborated in a corresponding method embodiment and will not be repeated here.

Fig.9 is a block diagram of a device for processing card application data, according to an embodiment. For example, the device 900 may be a mobile phone, a computer, a digital broadcast terminal, a message transceiver, a gaming console, a tablet equipment, medical equipment, fitness equipment, a Personal Digital Assistant, an aircraft, and/or the like.

Referring to Fig.9, the device 900 may include one or more components as follows: a processing component 902, a memory 904, a power supply component 906, a multimedia component 908, an audio component 910, an Input/Output (I/O) interface 912, a sensor component 914, and a communication component 916.

The processing component 902 generally controls an overall operation of the device 900, such as operations associated with display, a telephone call, data communication, a camera operation, and a recording operation. The processing component 902 may include one or more processors 920 to execute instructions so as to complete all or some steps of the method. In addition, the processing component 902 may include one or more modules to facilitate interaction between the processing component 902 and other components. For example, the processing component 902 may include a multimedia module to facilitate interaction between the multimedia component 908 and the processing component 902.

The memory 904 may be configured for storing various types of data to support the operation on the device 900. Example of such data may include instructions of any application or method configured for operating on the device 900, contact data, phonebook data, messages, pictures, videos, and/or the like. The memory 904 may be realized by any type of volatile or non-transitory storage equipment or combination thereof, such as Static Random Access Memory (SRAM), Electrically Erasable Programmable. Read-Only Memory (EEPROM), Erasable Programmable Read-Only Memory (EPROM), Programmable Read-Only Memory (PROM), Read-Only Memory (ROM), magnetic memory, flash memory, magnetic disk, or compact disk.

The power supply component 906 may supply electric power to various components of the device 900. The power supply component 906 may include a power management system, one or more power sources, and other components related to generating, managing and distributing electricity for the device 900.

The multimedia component 908 may include a screen providing an output interface between the device 900 and a user. In some embodiments, the screen may include a Liquid Crystal Display (LCD) and a Touch Panel (TP). If the screen includes a TP, the screen may be realized as a touch screen to receive an input signal from a user. The TP may include one or more touch sensors for sensing touch, slide and gestures on the TP The touch sensors not only may sense the boundary of a touch or slide move, but also detect the duration and pressure related to the touch or slide move. In some embodiments, the multimedia component 908 may include a front camera and/or a rear camera. When the device 900 is in an operation mode such as a shooting mode or a video mode, the front camera and/or the rear camera may receive external multimedia data. Each of the front camera and the rear camera may be a fixed optical lens system or may have a focal length and be capable of optical zooming.

The audio component 910 may be configured for outputting and/or inputting an audio signal. For example, the audio component 910 may include a microphone (MIC). When the device 900 is in an operation mode such as a call mode, a recording mode, and a voice recognition mode, the MIC may be configured for receiving an external audio signal. The received audio signal may be further stored in the memory 904 or may be sent via the communication component 916. In some embodiments, the audio component 910 may further include a loudspeaker configured for outputting the audio signal.

The I/O interface 912 may provide an interface between the processing component 902 and a peripheral interface module. Such a peripheral interface module may be a keypad, a click wheel, a button or the like. Such a button may include but is not limited to: a homepage button, a volume button, a start button, and a lock button.

The sensor component 914 may include one or more sensors for assessing various states of the device 900. For example, the sensor component 914 may detect an on/off state of the device 900 and relative positioning of components such as the display and the keypad of the device 900. The sensor component 914 may further detect a change in the position of the device 900 or of a component of the device 900, whether there is contact between the device 900 and a user, the orientation or acceleration/deceleration of the device 900, and a change in the temperature of the device 900. The sensor component 914 may include a proximity sensor configured for detecting existence of a nearby object without physical contact. The sensor component 914 may further include an optical sensor such as a Complementary Metal-Oxide-Semiconductor (CMOS) or Charge-Coupled-Device (CCD) image sensor used in an imaging application. In some embodiments, the sensor component 914 may further include an acceleration sensor, a gyroscope sensor, a magnetic sensor, a pressure sensor, or a temperature sensor.

The communication component 916 may be configured for facilitating wired or wireless communication between the device 900 and other equipment. The device 900 may access a wireless network based on a communication standard such as WiFi, 2G or 3G, or combination thereof. In an embodiment, the communication component 916 may receive a broadcast signal or broadcast related information from an external broadcast management system via a broadcast channel. In an embodiment, the communication component 916 may further include a Near Field Communication (NFC) module for short-range communication. For example, the NFC module may be based on Radio Frequency Identification (RFID), Infrared Data Association (IrDA), Ultra-Wideband (UWB) technology, Bluetooth (BT), and other technologies.

In an embodiment, the device 900 may be realized by one or more of Application Specific Integrated Circuits (ASIC), Digital Signal Processors (DSP), Digital Signal Processing Device (DSPD), Programmable Logic Devices (PLD), Field Programmable Gate Arrays (FPGA), controllers, microcontrollers, microprocessors or other electronic components to implement the method.

In an embodiment, a non-transitory computer-readable storage medium including instructions, such as a memory 904 including instructions, may be provided. The instructions may be executed by the processor 920 of the device 900 to implement the method. For example, the non-transitory computer-readable storage medium may be a Read-Only Memory (ROM), a Compact Disc Read-Only Memory (CD-ROM), a magnetic tape, a floppy disk, optical data storage equipment, etc.

Other embodiments herein will be apparent to those skilled in the art from consideration of the specification and practice of the invention disclosed here. This application is intended to cover any variations, uses, or adaptations of the disclosure following the general principles thereof and including such departures from the present disclosure as come within known or customary practice in the art.

### INDUSTRIAL APPLICABILITY

With a technical solution according to an embodiment herein, historical communication data including user information of a user required for card application may be acquired according to a received card application request; the user information may be extracted from the historical communication data; the extracted user information may be correspondingly written into a card application page, such that the user is not required to manually fill in the user information, saving time and trouble, reducing a probability of error, facilitating online card application by the user.

The acquired SMS message including the financial information is unlikely to be faked, so that the user information extracted from the historical communication data are more objective and accurate, increasing data authenticity, reducing a deviation due to manually filling in information by the user, reducing a risk of the card issuing agency; meanwhile, information may be extracted flexibly in multiple modes that are easy to implement.

The acquired payment account registration information is checked to be objective, authentic and unlikely to be faked, so that the user information extracted from the historical communication data are more objective and accurate, increasing data authenticity, reducing a deviation due to manually filling in information by the user, reducing a risk of the card issuing agency; meanwhile, information may be extracted flexibly in multiple modes that are easy to implement.

The acquired historical payment record is unlikely to be faked, so that the user information extracted from the historical communication data are more objective and accurate, increasing data authenticity, reducing a deviation due to manually filling in information by the user, reducing a risk of the card issuing agency; meanwhile, information may be extracted flexibly in multiple modes that are easy to implement.

The acquired mail client data are unlikely to be faked, so that the user information extracted from the historical communication data are more objective and accurate, increasing data authenticity, reducing a deviation due to manually filling in information by the user, reducing a risk of the card issuing agency; meanwhile, information may be extracted flexibly in multiple modes that are easy to implement.

The extracted information may be automatically written into the card application page. With such a simple information writing process, a page turning operation due to a small screen of a mobile terminal such as a mobile phone may be avoided.

Extracted information may be written into the card application page based on an operation of the user, such that a workload for manually inputting information by the user may be effectively reduced.

By displaying prompting information, the user may be prompted to check the information; the information on user modification to the card application page may be received, improving accuracy of the user information.

Embodiments of the present invention automate, at least partially, the process of completion of an application form (notably during an online card application process) by automatically extracting required user information from acquired historical communication data. Thus, the user's time and effort is saved. Moreover, the user information extracted from acquired historical communication data is reliable.

## Claims

1. A method for processing card application data, **characterized in that** the method comprises:
receiving a card application request (S101, S501);
acquiring, according to the card application request, historical communication data comprising user information of a user required for card application (S102, S502);
extracting the user information from the historical communication data (S103, S503);
correspondingly writing the user information into a card application page (S104, S504); and
receiving a submission request, and submitting, according to the submission request, the card application page (S105, S507).

2. The method according to claim 1, wherein the acquiring, according to the card application request, of historical communication data comprising user information of a user required for card application comprises:
acquiring, according to the card application request, an SMS message comprising financial information (S201); and
the extracting the user information from the historical communication data comprises:
analyzing the SMS message, and extracting income information of the user according to a result of the analysis (S201).

3. The method according to claim 1, wherein the acquiring, according to the card application request, of historical communication data comprising user information of a user required for card application comprises:
acquiring, according to the card application request, payment account registration information (S202); and
the extracting the user information from the historical communication data comprises:
extracting identity information of the user from the payment account registration information (S202).

4. The method according to claim 1, wherein the acquiring, according to the card application request, of historical communication data comprising user information of a user required for card application comprises:
acquiring a historical payment record according to the card application request (S203); and
the extracting the user information from the historical communication data comprises:
extracting a mailing address of the user from the historical payment record (S203).

5. The method according to claim 1, wherein the acquiring, according to the card application request, of historical communication data comprising user information of a user required for card application comprises:
acquiring mail client data according to the card application request (S204); and
the extracting the user information from the historical communication data comprises:
extracting email information of the user from the mail client data (S204).

6. The method according to claim 1, wherein the correspondingly writing the user information into a card application page comprises:
matching the user information to an entry to be filled in on the card application page, and writing, according to a matching result, the user information into an entry to be filled in corresponding to the user information.

7. The method according to claim 1, wherein the correspondingly writing the user information into a card application comprises:
receiving a trigger instruction for triggering an entry to be filled in on the card application page, and displaying, according to the trigger instruction, the user information corresponding to the triggered entry to be filled in; and
receiving a writing instruction for writing the displayed user information, and writing, according to the writing instruction, the displayed user information into the triggered entry to be filled in.

8. The method according to claim 1, further comprising:
before the receiving a submission request, displaying prompting information for prompting the user to check the user information (S505); and
receiving information on user modification to the card application page (S506).

9. A device for processing card application data, **characterized in that** the device comprises:
a receiving module (61) configured for: receiving a card application request;
an acquiring module (62) configured for: acquiring, according to the card application request received by the receiving module (61), historical communication data comprising user information of a user required for card application;
an extracting module (63) configured for: extracting the user information from the historical communication data acquired by the acquiring module (62);
a writing module (64) configured for: correspondingly writing the user information extracted by the extracting module (63) into a card application page; and
a submitting module (64) configured for: receiving a submission request, and submitting, according to the submission request, the card application page into which the writing module (64) writes the user information.

10. The device according to claim 9, wherein the acquiring module (62) comprises:
a first acquiring sub-module (621) configured for: acquiring, according to the card application request, an SMS message comprising financial information; and
the extracting module (63) comprises:
a first extracting sub-module (631) configured for: analyzing the SMS message acquired by the first acquiring sub-module (621), and extracting income information of the user according to a result of the analysis.

11. The device according to claim 9, wherein the acquiring module (62) comprises:
a second acquiring sub-module (622) configured for: acquiring, according to the card application request, payment account registration information; and
the extracting module (63) comprises:
a second extracting sub-module (632) configured for: extracting identity information of the user from the payment account registration information acquired by the second acquiring sub-module (622).

12. The device according to claim 9, wherein the acquiring module (62) comprises:
a third acquiring sub-module (623) configured for: acquiring a historical payment record according to the card application request; and
the extracting module (63) comprises:
a third extracting sub-module (633) configured for: extracting a mailing address of the user from the historical payment record acquired by the third acquiring sub-module (623).

13. A device (900) for processing card application data, **characterized in that** the device (900) comprises:
a processor (920); and
a memory (904) configured for storing an instruction executable by the processor (920),
wherein the processor (920) is configured for:
receiving a card application request;
acquiring, according to the card application request, historical communication data comprising user information of a user required for card application;
extracting the user information from the historical communication data;
correspondingly writing the user information into a card application page; and
receiving a submission request, and submitting, according to the submission request, the card application page.

14. A computer program comprising instructions for executing the steps of the method according to any one of claims 1 to 8 when said program is executed by a computer.

15. A recording medium readable by a computer and having recorded thereon a computer program comprising instructions for executing the steps of the method according to any one of claims 1 to 8.

## Amended claims

### Amended claims in accordance with Rule 137(2) EPC.

1. A computer-implemented method for processing card application data the method comprising:
receiving, at a terminal, a card application request (S101, S501);
writing, by the terminal, user information into a card application page (S104, S504); and
receiving, by the terminal, a submission request, and submitting, according to the submission request, the card application page to a server (S105, S507);
**characterized in that** the method comprises:
the terminal acquiring, according to the card application request, historical communication data comprising user information of a user required for card application, said historical communication data comprising an SMS message (S102,S502);
the terminal analyzing the historical communication data;
the terminal extracting user information of a user required for card application (S103,S503) from said SMS message of the historical communication data according to a result of the analysis; and
the terminal writing into the card application page user information extracted from said SMS message (S105,S507).

2. The method according to claim 1, wherein the acquiring, according to the card application request, of historical communication data comprising user information of a user required for card application comprises:
acquiring, by the terminal, according to the card application request, an SMS message comprising financial information (S201); and
the extracting of the user information from the historical communication data comprises:
analyzing the SMS message, by the terminal, and extracting income information of the user according to a result of the analysis (S201).

3. The method according to claim 1, wherein the acquiring, according to the card application request, of historical communication data comprising user information of a user required for card application comprises:
acquiring, by the terminal, according to the card application request, payment account registration information (S202); and
the extracting of the user information from the historical communication data comprises:
extracting, by the terminal, identity information of the user from the payment account registration information (S202).

4. The method according to claim 1, wherein the acquiring, according to the card application request, of historical communication data comprising user information of a user required for card application comprises:
acquiring, by the terminal, a historical payment record according to the card application request (S203); and
the extracting of the user information from the historical communication data comprises:
extracting, by the terminal, a mailing address of the user from the historical payment record (S203).

5. The method according to claim 1, wherein the acquiring, according to the card application request, of historical communication data comprising user information of a user required for card application comprises:
acquiring, by the terminal, mail client data according to the card application request (S204); and
the extracting of the user information from the historical communication data comprises:
extracting, by the terminal, email information of the user from the mail client data (S204).

6. The method according to claim 1, wherein the writing of the user information into the card application page comprises:
the terminal matching the user information to an entry to be filled in on the card application page, and writing, according to a matching result, the user information into an entry to be filled in corresponding to the user information.

7. The method according to claim 1, wherein the writing of the user information into the card application page comprises:
receiving, by the terminal, a trigger instruction for triggering an entry to be filled in on the card application page, and displaying, according to the trigger instruction, the user information corresponding to the triggered entry to be filled in; and
receiving, by the terminal, a writing instruction for writing the displayed user information, and writing, by the terminal, according to the writing instruction, the displayed user information into the triggered entry to be filled in.

8. The method according to claim 1, further comprising:
before the receiving of a submission request, the terminal displaying prompting information for prompting the user to check the user information (S505); and
receiving, by the terminal, information on user modification to the card application page (S506).

9. A device for processing card application data, **characterized in that** the device comprises:
a receiving module (61) configured for: receiving a card application request;
a writing module (64) configured for: writing user information into a card application page; and
a submitting module (64) configured for: receiving a submission request, and submitting to a server, according to the submission request, the card application page into which the writing module (64) writes the user information;**characterized in that** there is further provided:
an acquiring module (62) configured for: acquiring, according to the card application request received by the receiving module (61), historical communication data comprising user information of a user required for card application, said historical communication data comprising an SMS message; and
an extracting module (63) configured for: analyzing the historical communication data and extracting user information from said SMS message of the historical communication data acquired by the acquiring module (62);
wherein the writing module (64) is configured for: writing into the card application page user information extracted from the SMS message by the extracting module (63).

10. The device according to claim 9, wherein the acquiring module (62) comprises:
a first acquiring sub-module (621) configured for: acquiring, according to the card application request, an SMS message comprising financial information; and
the extracting module (63) comprises:
a first extracting sub-module (631) configured for: analyzing the SMS message acquired by the first acquiring sub-module (621), and extracting income information of the user according to a result of the analysis.

11. The device according to claim 9, wherein the acquiring module (62) comprises:
a second acquiring sub-module (622) configured for: acquiring, according to the card application request, payment account registration information; and
the extracting module (63) comprises:
a second extracting sub-module (632) configured for: extracting identity information of the user from the payment account registration information acquired by the second acquiring sub-module (622).

12. The device according to claim 9, wherein the acquiring module (62) comprises:
a third acquiring sub-module (623) configured for: acquiring a historical payment record according to the card application request; and
the extracting module (63) comprises:
a third extracting sub-module (633) configured for: extracting a mailing address of the user from the historical payment record acquired by the third acquiring sub-module (623).

13. The device according to any one of claims 9 to 12, comprising
a processor (920); and
a memory (904) configured for storing an instruction executable by the processor (920) to cause the processor to implement the receiving module, writing module, submitting module, acquiring module, and extracting module.

14. A computer program comprising instructions for executing the steps of the method according to any one of claims 1 to 8 when said program is executed by a computer.

15. A recording medium readable by a computer and having recorded thereon a computer program comprising instructions for executing the steps of the method according to any one of claims 1 to 8.
